# FASCICULE DE BREVET EUROPEEN

(11) **EP 3 797 562 B1**
(45) Date de publication et mention de la délivrance du brevet: **01.03.2023**
(21) Numéro de dépôt: 19730369.6
(22) Date de dépôt: 18.06.2019
(51) Int. Cl.: H04W 84/12, H04W 16/14, H04W 72/04, H04W 76/14, H04W 76/19, H04W 76/23, H04W 88/04

(54) **PROCEDE DE GESTION D'UN CANAL DE COMMUNICATION EN CAS DE DÉTECTION D'UN SIGNAL RADAR**
VERFAHREN ZUR VERWALTUNG EINES KOMMUNIKATIONSKANALS BEI ERKENNEN EINES RADARSIGNALS
METHOD FOR MANAGING A COMMUNICATION CHANNEL IN THE EVENT A RADAR SIGNAL IS DETECTED

(30) Priorité: 26.06.2018 FR 1855710
(43) Date de publication de la demande: 31.03.2021
(73) Titulaire: SAGEMCOM BROADBAND SAS, 92500 Rueil-Malmaison (FR)
(72) Inventeur: RABY, Florent, 92500 RUEIL MALMAISON (FR)
(74) Mandataire: Cabinet Le Guen Maillet
(86) Numéro de dépôt international: PCT/EP2019/065946
(87) Numéro de publication internationale: WO 2020/002037

(56) Documents cités:
- WO-A2-2010/138935
- US-A1- 2004 156 336
- US-A1- 2017 272 273

## Description

L'invention concerne un procédé de gestion d'un canal de communication utilisé par une pluralité de dispositifs Wi-Fi d'un réseau Wi-Fi de type infrastructure pour mettre en oeuvre un réseau d'infrastructure dans ledit réseau Wi-Fi, un dispositif et un système mettant en oeuvre le procédé.

La technologie Wi-Fi est, à l'heure actuelle, devenue quasiment incontournable pour la mise en oeuvre de réseaux locaux sans fils (« Wireless Local Area Networks (WLAN) » en terminologie anglo-saxonne). Le Wi-Fi est un ensemble de protocoles de communication sans fil régis par des normes du groupe IEEE 802.11 (ISO/CEI 8802-11). Grâce aux normes Wi-Fi, il est possible de créer des réseaux WLAN à haut débit. Au fil des années, la technologie Wi-Fi n'a cessé d'évoluer et autorise des débits de plus en plus élevés. On peut ainsi citer la norme IEEE802.11b qui autorise « 11 » Mbit/s théoriques, les normes IEEE802.11a et IEEE802.11g qui autorisent « 54 » Mbit/s théoriques, IEEE802.11n qui autorise « 600 » Mbit/s théoriques et la plus récente IEEE802.11ac qui autorise « 1.3 » Gbit/s. Certaines normes Wi-Fi, telles que la norme IEEE802.11b, utilisent une bande de fréquence dite des « 2.4 » Ghz, alors que d'autres normes Wi-Fi, telles que la norme IEEE802.11ac, utilisent une bande de fréquence dite des « 5 » Ghz.

Les normes du groupe IEEE 802.11 définissent deux modes de fonctionnement :
- un mode dit *infrastructure* dans lequel chaque terminal Wi-Fi doit se connecter à un dispositif Wi-Fi fonctionnant en mode *point d'accès* (« access point » en terminologie anglo-saxonne) ;
- un mode dit *Ad-Hoc* dans lequel les terminaux Wi-Fi communiquent entre eux sans passer par un dispositif Wi-Fi fonctionnant en mode point d'accès.

En mode infrastructure, un ensemble formé par un dispositif Wi-Fi fonctionnant en mode point d'accès et au moins un terminal Wi-Fi connecté audit dispositif Wi-Fi est appelé *ensemble de services de base* (« basic service set (BSS) », en terminologie anglo-saxonne). Chaque BSS est identifié par un identifiant appelé *BSSID.*

Il est possible de relier plusieurs BSS entre eux afin de constituer un ensemble de services étendu (« extended service set (ESS) » en terminologie anglo-saxonne). Par exemple, lorsqu'on veut relier deux BSS pour former un ESS, on relie les dispositifs Wi-Fi fonctionnant en mode point d'accès de chaque BSS entre eux par un réseau dit *d'infrastructure* (« backhaul » en terminologie anglo-saxonne) qui peut être filaire ou sans fils. Le réseau d'infrastructure permet à des données et à des commandes de gestion du réseau de se propager dans tout l'ESS. Une hiérarchie parent-enfant est alors créée entre les deux dispositifs Wi-Fi reliés. L'un des dispositifs Wi-Fi devient parent de l'autre dispositif Wi-Fi, l'autre dispositif Wi-Fi devenant enfant du dispositif Wi-Fi parent. Le dispositif Wi-Fi parent joue un rôle de point d'accès pour le dispositif Wi-Fi enfant. Le dispositif Wi-Fi enfant joue un rôle de *station* pour le dispositif Wi-Fi parent. Un dispositif Wi-Fi qui n'est que parent dans un ESS peut donc se contenter de ne fonctionner qu'en mode point d'accès. Un dispositif Wi-Fi peut toutefois être à la fois parent et enfant, par exemple lorsque ce dispositif Wi-Fi est un dispositif intermédiaire permettant de relier deux dispositifs Wi-Fi fonctionnant en mode point d'accès de deux BSS différents. Dans ce cas, ce dispositif Wi-Fi intermédiaire doit pouvoir fonctionner en mode point d'accès et en mode station.

Un réseau d'infrastructure doit transporter une quantité significative de données de manière fiable. Lorsqu'il est implémenté sous forme de réseau sans fils, il est en général supporté par un canal Wi-Fi offrant de bonnes performances, notamment dans la bande de fréquence 5 GHz. Toutefois, une partie de cette bande de fréquence est potentiellement utilisée par des radars, notamment les sous-bandes de fréquence *UNII-*2 (« Unlicensed National Information Infrastructure » en terminologie anglo-saxonne), *UNII-2 extended* et *UNII-3.* On note que la sous-bande UNII-1 de la bande de fréquence 5 GHz n'est pas utilisée par les radars. Il est connu que dans certains pays la sous-bande *UNII-2* couvre une bande de fréquence allant de « 5260 » MHz à « 5320 » MHz et comprend « 4 » canaux, *UNII-2 extended* couvre une bande de fréquence allant de « 5500 » MHz à « 5700 » MHz et comprend « 11 » canaux et *UNII-3* couvre une bande de fréquence allant de « 5745 » MHz à « 5805 » MHz et comprend « 4 » canaux. Afin de ne pas perturber le fonctionnement des radars, la norme IEEE802.11h impose un certain nombre de règles de cohabitation entre les réseaux Wi-Fi et lesdits radars connus sous l'acronyme DFS (Sélection dynamique de fréquence, « Dynamic Frequency Sélection » en terminologie anglo-saxonne). Les canaux des sous-bandes de fréquence UNII-2, UNII-2 extended et UNII-3 sont d'ailleurs couramment appelés canaux DFS. Les règles DFS impliquent notamment que :
- lorsqu'un signal radar est détecté par un dispositif Wi-Fi parent *(i.e.* dispositif Wi-Fi fonctionnant au moins en mode point d'accès) sur un canal utilisé par le dispositif Wi-Fi parent pour implémenter un réseau d'infrastructure, le dispositif Wi-Fi parent devrait migrer vers un canal sur lequel aucun signal radar n'a été détecté. Le dispositif Wi-Fi parent devrait de plus prévenir les dispositifs Wi-Fi enfants avec lesquels il est associé de la migration. Il peut le faire en insérant un élément CSA (annonce de changement de canal, « channel switch announcement » en terminologie anglo-saxonne) dans une trame de balise («beacon frame » en terminologie anglo-saxonne). Il est aussi possible d'annoncer la migration en transmettant une trame d'action prioritaire contenant l'élément CSA. En plus d'annoncer le changement de canal, l'élément CSA donne un identifiant du canal vers lequel migrer.
- le dispositif Wi-Fi parent devrait vérifier la disponibilité des canaux non utilisés (si ces canaux sont des canaux DFS). Si pendant une période prédéfinie, aucun signal radar n'est détecté sur ces canaux, ces canaux sont déclarés disponibles.
- Chaque canal abandonné suite à une détection d'un signal radar est abandonné pendant une période prédéfinie NOP (Non Occupancy Period). Une période prédéfinie NOP est couramment fixée à « 30 » minutes.

Une détection d'un signal radar peut donc se traduire par une coupure temporaire du réseau d'infrastructure tant qu'un canal libre de tout signal radar n'a été trouvé.

Par ailleurs, les normes IEEE802.11 ne prévoient pas que les trames de balise ou les trames d'action prioritaire contenant les éléments CSA soient acquittées par leur destinataire. Un dispositif Wi-Fi parent ayant émis une telle trame ne sait pas si cette trame a été reçue, mais ne renverra pas la trame pour autant. Or, il arrive que certaines trames soient perdues. La perte d'une trame contenant un élément CSA implique que certains dispositifs Wi-Fi enfants ne sont pas informés d'un changement de canal de leur dispositif Wi-Fi parent et continueront donc à émettre sur un canal qu'ils devraient laisser libre pour les signaux radars.

De plus, dans certains cas, le signal radar n'est pas détecté par un dispositif Wi-Fi parent mais par un dispositif Wi-Fi enfant. Le dispositif Wi-Fi enfant va alors se déconnecter du canal sur lequel a été détecté le signal radar. Il faudrait alors que le dispositif Wi-Fi enfant prévienne son dispositif Wi-Fi parent de la détection du signal radar. Or, à l'heure actuelle, un dispositif Wi-Fi enfant n'a aucun moyen de prévenir son dispositif Wi-Fi parent de la détection d'un signal radar. Par exemple, un dispositif Wi-Fi enfant ne peut pas émettre une trame contenant un élément CSA en direction de son dispositif Wi-Fi parent.

Le document US 2004/0156336 A1 décrit un procédé de détection d'un signal radar et de basculement vers un nouveau canal exempt de signal radar.

Il est souhaitable de pallier ces inconvénients de l'état de la technique. Il est notamment souhaitable de proposer une méthode permettant à chaque dispositif Wi-Fi parent (i.e. dispositif Wi-Fi fonctionnant au moins en mode point d'accès) et chaque dispositif Wi-Fi enfant (i.e. dispositif Wi-Fi fonctionnant au moins en mode station) connectés à un réseau d'infrastructure utilisant un canal sur lequel a été détecté un signal radar, de migrer rapidement vers un autre canal en cas de pertes de trames contenant un élément CSA afin d'éviter ou de limiter dans le temps une coupure dudit réseau d'infrastructure.

Il est par ailleurs souhaitable de proposer une méthode qui soit simple à mettre en oeuvre et à faible coût.

Selon un premier aspect de la présente invention, la présente invention concerne un procédé de gestion d'un canal de communication utilisé par une pluralité de dispositifs Wi-Fi d'un réseau Wi-Fi de type infrastructure pour mettre en oeuvre un réseau d'infrastructure dans ledit réseau Wi-Fi, le procédé étant exécuté par un premier dispositif Wi-Fi de la pluralité et comprenant :
a) détecter qu'un second dispositif Wi-Fi de la pluralité connecté directement au premier dispositif Wi-Fi s'est déconnecté d'un canal initial d'une sous-bande initiale d'une bande de fréquence par détection qu'aucune trame d'entretien de connexion Wi-Fi n'a été reçue, sur le canal initial, en provenance dudit second dispositif Wi-Fi pendant une période prédéfinie, ledit canal initial étant utilisé par la pluralité de dispositifs Wi-Fi pour mettre en oeuvre le réseau d'infrastructure ;
b) suite à cette détection, se mettre en écoute sur chaque canal de communication d'une sous-bande prédéfinie, dite sous-bande de secours d'une bande de fréquence, sur lequel le second dispositif Wi-Fi peut migrer pour mettre en oeuvre le réseau d'infrastructure en cas de détection par le second dispositif Wi-Fi d'un signal radar sur le canal initial, les sous-bandes initiale et de secours étant différentes ;

- en cas de réception par le premier dispositif Wi-Fi sur un canal, dit canal de secours, de ladite sous-bande de secours d'une trame contenant un identifiant du second dispositif :
   - faire migrer le premier dispositif Wi-Fi vers ledit canal de secours,
   - vérifier si le second dispositif s'est reconnecté sur le canal initial ;
   - si le second dispositif s'est reconnecté sur le canal initial, faire migrer le premier dispositif Wi-Fi vers ledit canal initial ;
   - sinon, attendre pendant une durée prédéfinie et répéter ladite vérification;
      ; et
- sinon, rester sur ledit canal initial si ledit premier dispositif détermine que le second dispositif s'est reconnecté sur le canal initial et, sinon, répéter l'étape b).

Prédéfinir vers quelle sous-bande de fréquence ou vers quel canal de communication va migrer chaque dispositif Wi-Fi utilisé pour mettre en oeuvre le réseau d'infrastructure permet à chaque dispositif Wi-Fi de savoir comment les autres dispositifs Wi-Fi se comporteraient en cas de détection d'un signal radar. Ainsi, en cas de déconnexion d'un deuxième dispositif Wi-Fi du canal initial, un premier dispositif peut identifier si le motif de cette déconnexion est une détection d'un signal radar s'il détecte que le deuxième dispositif s'est reconnecté sur le canal de secours.

Selon un mode de réalisation, la sous-bande de secours est une sous-bande d'une bande de fréquence utilisable par un réseau Wi-Fi sur laquelle aucune détection d'un signal radar n'est possible.

Selon un mode de réalisation, le canal de secours est prédéfini dans la sous-bande de secours.

Selon un mode de réalisation, chaque dispositif Wi-Fi de la pluralité comprend une pluralité de modules radio, au moins un premier module radio étant utilisé pour mettre en oeuvre le réseau d'infrastructure en utilisant le canal initial et au moins un second module radio étant utilisé pour mettre en oeuvre un réseau d'accès permettant à des terminaux Wi-Fi de se connecter à un des dispositifs Wi-Fi mettant en oeuvre le réseau d'infrastructure, et en ce que, lors de chaque migration d'un dispositif Wi-Fi de la pluralité vers un canal de secours, le dispositif Wi-Fi utilise un second module radio pour communiquer sur le canal de secours.

Selon un mode de réalisation, chaque dispositif Wi-Fi de la pluralité comprend un module, dit module point d'accès, adapté pour faire fonctionner ledit dispositif Wi-Fi en mode point d'accès dans le réseau d'infrastructure et un module, dit module station, adapté pour faire fonctionner le dispositif Wi-Fi en mode station dans le réseau d'infrastructure, le premier dispositif Wi-Fi fonctionnant en mode point d'accès vis-à vis du deuxième dispositif Wi-Fi qui fonctionne en mode station vis-à-vis du premier dispositif Wi-Fi, ou le premier dispositif Wi-Fi fonctionnant en mode station vis-à vis du deuxième dispositif Wi-Fi qui fonctionne en mode point d'accès vis-à-vis du premier dispositif Wi-Fi.

Selon un deuxième aspect de l'invention, l'invention concerne un dispositif Wi-Fi compris dans une pluralité de dispositifs Wi-Fi d'un réseau Wi-Fi de type infrastructure, la pluralité de dispositifs Wi-Fi implémentant un réseau d'infrastructure dans le réseau Wi-Fi. Le dispositif Wi-Fi, dit premier dispositif Wi-Fi comprend au moins un processeur configuré pour :
a) détecter (401, 501) qu'un second dispositif Wi-Fi de la pluralité connecté directement au premier dispositif Wi-Fi s'est déconnecté d'un canal initial d'une sous-bande initiale d'une bande de fréquence par détection qu'aucune trame d'entretien de connexion Wi-Fi n'a été reçue, sur le canal initial, en provenance dudit second dispositif Wi-Fi pendant une période prédéfinie, ledit canal initial étant utilisé par la pluralité de dispositifs Wi-Fi pour mettre en oeuvre le réseau d'infrastructure ;
b) suite à cette détection, se mettre en écoute sur chaque canal de communication d'une sous-bande prédéfinie, dite sous-bande de secours, d'une bande de fréquence sur lequel le second dispositif Wi-Fi peut migrer pour mettre en oeuvre le réseau d'infrastructure en cas de détection par le second dispositif Wi-Fi d'un signal radar sur le canal initial, les sous-bandes initiale et de secours étant différentes ;

- en cas de réception par le premier dispositif Wi-Fi sur un canal, dit canal de secours, de ladite sous-bande de secours d'une trame contenant un identifiant du second dispositif :
   - faire migrer le premier dispositif Wi-Fi vers ledit canal de secours,
   - vérifier si le second dispositif s'est reconnecté sur le canal initial ;
   - si le second dispositif s'est reconnecté sur le canal initial, faire migrer le premier dispositif Wi-Fi vers ledit canal initial ;
   - sinon, attendre pendant une durée prédéfinie et répéter ladite vérification ; et
- sinon, rester sur ledit canal initial si ledit premier dispositif détermine que le second dispositif s'est reconnecté sur le canal initial et, sinon, répéter l'étape b).

Selon un troisième aspect de l'invention, l'invention concerne un système comprenant une pluralité de dispositifs Wi-Fi selon le deuxième aspect, chaque dispositif Wi-Fi de la pluralité comprenant un module, dit module point d'accès, adapté pour faire fonctionner ledit dispositif Wi-Fi en mode point d'accès dans le réseau d'infrastructure et un module, dit module station, adapté pour faire fonctionner le dispositif Wi-Fi en mode station dans le réseau d'infrastructure, les dispositifs Wi-Fi de la pluralité étant organisés selon une hiérarchie parent/enfant, un premier dispositif Wi-Fi de la pluralité étant parent d'un deuxième dispositif Wi-Fi de la pluralité lorsqu'il fonctionne en mode point d'accès vis-à-vis du deuxième dispositif Wi-Fi qui lui fonctionne en mode station vis-à-vis du premier dispositif Wi-Fi, la pluralité de dispositifs Wi-Fi comprenant au moins un dispositif Wi-Fi exclusivement parent, et au moins un dispositif Wi-Fi exclusivement enfant.

Selon un mode de réalisation, la pluralité de dispositifs Wi-Fi comprend au moins un dispositif Wi-Fi conjointement parent et enfant.

Selon un quatrième aspect de l'invention, l'invention concerne un programme d'ordinateur comprenant des instructions pour mettre en oeuvre, par un dispositif, le procédé selon le premier aspect, lorsque ledit programme est exécuté par un processeur dudit dispositif.

Selon un cinquième aspect de l'invention, l'invention concerne des moyens de stockage, stockant un programme d'ordinateur comprenant des instructions pour mettre en oeuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau Wi-Fi
- La Fig. 2A illustre schématiquement de manière détaillée chaque dispositif Wi-Fi du réseau Wi-Fi;
- la Fig. 2B illustre schématiquement un module de traitement compris dans un dispositif Wi-Fi ;
- la Fig. 3 illustre schématiquement un procédé de migration d'un premier canal de communication vers un second canal de communication lors d'une détection d'un signal radar sur le premier canal ;
- la Fig. 4 illustre schématiquement un procédé, selon un premier aspect de l'invention, exécuté par un dispositif Wi-Fi jouant un rôle de point d'accès, de gestion d'un canal de communication utilisé pour mettre en oeuvre un réseau d'infrastructure, en cas de déconnexion d'un dispositif Wi-Fi jouant un rôle de station; et,
- la Fig. 5 illustre schématiquement un procédé, selon un premier aspect de l'invention, exécuté par un dispositif Wi-Fi jouant un rôle de station, de gestion d'un canal de communication utilisé pour mettre en oeuvre un réseau d'infrastructure, en cas de déconnexion d'un dispositif Wi-Fi jouant un rôle de point d'accès.

L'invention est décrite par la suite dans un contexte de réseau Wi-Fi d'infrastructure où chaque dispositif Wi-Fi (point d'accès ou station) dudit réseau est capable de détecter un signal radar. L'invention est aussi adaptée au cas où seule une partie des dispositifs Wi-Fi est capable de détecter un signal radar.

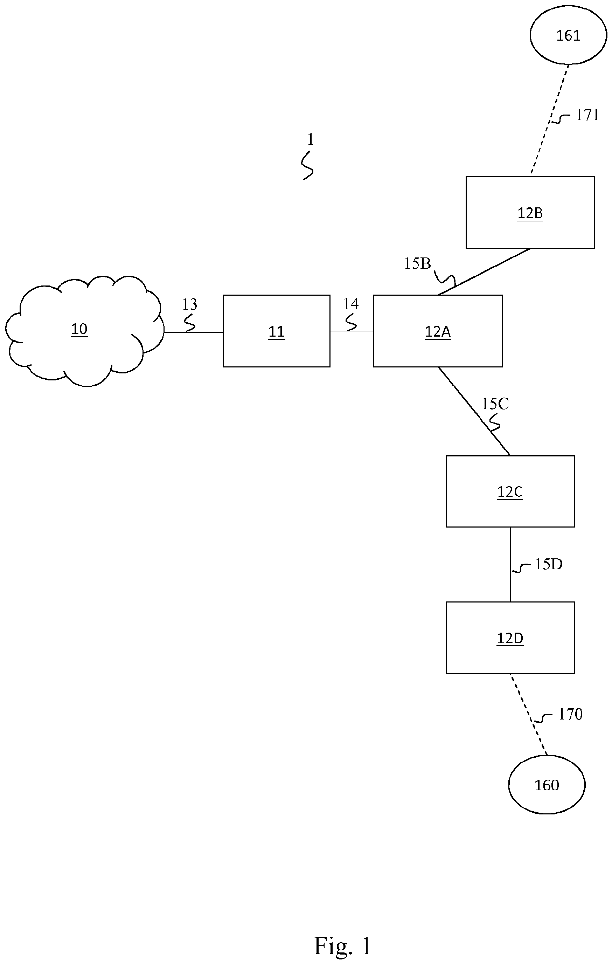

La **Fig. 1** illustre schématiquement un réseau Wi-Fi 1.

Le réseau 1 comprend une passerelle internet (« Gateway » en terminologie anglo-saxonne) 11 faisant un lien entre un réseau 10 de type WAN (réseau étendu, « Wide Area Network » en terminologie anglo-saxonne) tel que le réseau Internet et un réseau de type LAN (réseau local, « Local Area Network » en terminologie anglo-saxonne) par l'intermédiaire de liaisons 13 et 14. La liaison 13 est par exemple de type filaire, alors que la liaison 14 est de type filaire ou sans fils.

Le réseau LAN comprend une pluralité de dispositifs Wi-Fi 12A, 12B, 12C et 12D.

Dans le réseau 1, le dispositif Wi-Fi 12A joue un rôle de noeud central puisque pour communiquer avec la passerelle 11, chaque autre dispositif Wi-Fi du réseau 1 doit passer par le dispositif Wi-Fi 12A. Le dispositif Wi-Fi 12A est un dispositif Wi-Fi parent pour les dispositifs Wi-Fi 12B et 12C et les dispositifs Wi-Fi 12B et 12C sont des dispositifs Wi-Fi enfants pour le dispositif Wi-Fi 12A. Le dispositif Wi-Fi 12C est un dispositif Wi-Fi parent pour le dispositif Wi-Fi 12D et le dispositif Wi-Fi 12D est un dispositif Wi-Fi enfant pour le dispositif Wi-Fi 12C.

Le dispositif Wi-Fi 12A communique avec le dispositif Wi-Fi 12B (respectivement 12C) via une liaison Wi-Fi 15B (respectivement 15C). Le dispositif Wi-Fi 12C communique avec le dispositif Wi-Fi 12D via une liaison Wi-Fi 15D.

Le réseau 1 comprend aussi deux terminaux Wi-Fi 160 et 161. Le terminal Wi-Fi 160 est connecté au dispositif Wi-Fi 12D par une liaison Wi-Fi 170. Le terminal Wi-Fi 161 est connecté au dispositif Wi-Fi 12B par une liaison Wi-Fi 171. Les liaisons Wi-Fi 170 et 171 forment un réseau d'accès (« fronthaul » en terminologie anglo-saxonne) respectivement pour le dispositif Wi-Fi 12D et pour le dispositif Wi-Fi 12B.

Les dispositifs Wi-Fi 12A, 12B, 12C et 12D et les terminaux Wi-Fi 160 et 161 forment un réseau WiFi. Les dispositifs Wi-Fi 12A, 12B, 12C et 12D forment un réseau d'infrastructure (« backhaul » en terminologie anglo-saxonne) pour ledit réseau Wi-Fi.

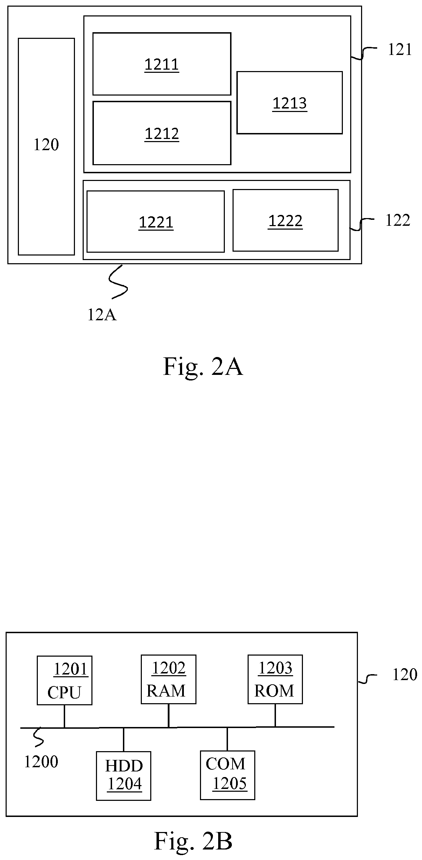

La **Fig. 2A** illustre schématiquement de manière détaillée chaque dispositif Wi-Fi du réseau 1.

Dans la Fig. 1, nous prenons l'exemple du dispositif Wi-Fi 12A. Les dispositifs Wi-Fi 12B, 12C et 12D sont toutefois identiques au dispositif Wi-Fi 12A.

Le dispositif Wi-Fi 12A comprend un module de traitement 120, un module de réseau d'infrastructure 121, appelé *module backhaul,* chargé de mettre en oeuvre un réseau d'infrastructure utilisé par le dispositif 12A et un module de réseau d'accès 122, appelé *module fronthaul,* chargé de mettre en oeuvre un réseau d'accès que le dispositif 12A mettrait à disposition de terminaux Wi-Fi.

Le module backhaul 121 comprend un module 1211 adapté pour faire fonctionner le dispositif Wi-Fi 12A en mode point d'accès pour le réseau d'infrastructure, appelé *module point d'accès backhaul,* un module 1212 adapté pour faire fonctionner le dispositif Wi-Fi 12A en mode station pour le réseau d'infrastructure, appelé *module station backhaul,* et au moins un module radio 1213 permettant au module backhaul 121 de communiquer physiquement sur le réseau d'infrastructure.

Le module fronthaul 122 comprend au moins un module 1221 adapté pour faire fonctionner le dispositif Wi-Fi 12A en mode point d'accès pour le réseau d'accès, appelé *module point d'accès fronthaul* et au moins un module radio 1222 permettant au module fronthaul 122 de communiquer physiquement sur le réseau d'accès.

Chaque module radio (i.e. 1213 et 1222) est capable de communiquer dans une pluralité de sous-bandes de la bande 5 GHz. Par exemple, chaque module radio est capable de communiquer dans les sous-bandes UNII-1, UNII-2, UNII-2e et UNII-3.

On note que les modules backhaul 121 et fronthaul 122 (et les modules qui les constituent) sont capables de communiquer entre eux en utilisant par exemple, un bus de communication interne au dispositif Wi-Fi 12A non représenté.

La **Fig. 2B** illustre schématiquement un exemple d'architecture matérielle d'un module de traitement 120 compris dans un module Wi-Fi.

Dans la Fig. 2B, nous prenons l'exemple du module de traitement 120 du dispositif Wi-Fi 12A. Les modules de traitement 120 des dispositifs Wi-Fi 12B, 12C et 12D sont toutefois identiques.

Selon l'exemple d'architecture matérielle représenté à la Fig. 2B, le module de traitement 120 comprend alors, reliés par un bus de communication 1200 : un processeur ou CPU (« Central Processing Unit » en terminologie anglo-saxonne) 1201 ; une mémoire vive RAM (« Random Access Memory » en terminologie anglo-saxonne) 1202 ; une mémoire morte ROM (« Read Only Memory » en terminologie anglo-saxonne) 1203 ; une unité de stockage telle qu'un disque dur ou un lecteur de support de stockage, tel qu'un lecteur de cartes SD (« Secure Digital » en terminologie anglo-saxonne) 1204 ; au moins une interface de communication 1205 permettant au module de traitement 120 de communiquer avec d'autres modules du dispositif Wi-Fi 12A et notamment les modules du module backhaul 121 et les modules du module fronthaul 122.

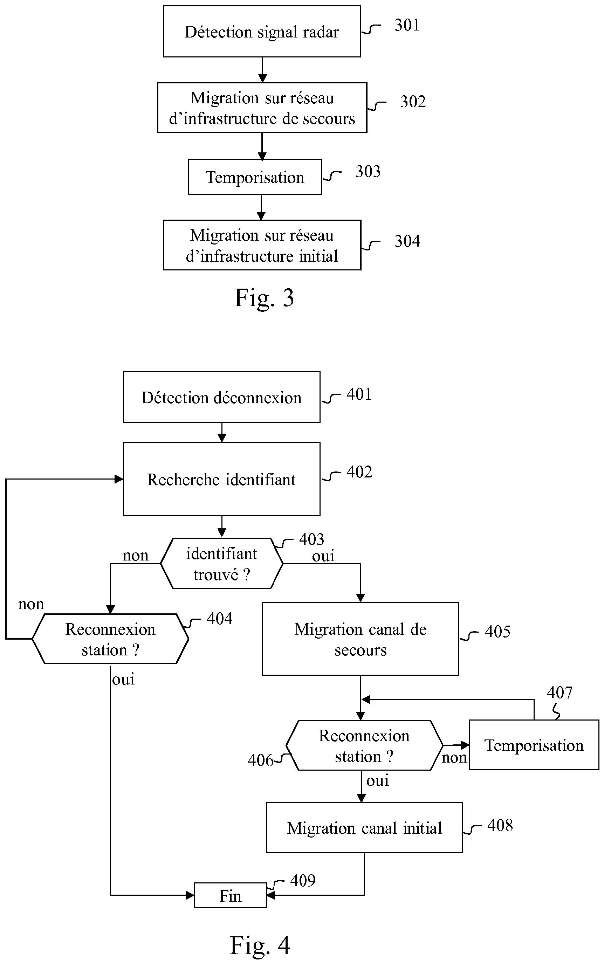

Le processeur 1201 est capable d'exécuter des instructions chargées dans la RAM 1202 à partir de la ROM 1203, d'une mémoire externe (non représentée), d'un support de stockage (tel qu'une carte SD), ou d'un réseau de communication. Lorsque le dispositif Wi-Fi 12A est mis sous tension, le processeur 1201 est capable de lire de la RAM 1202 des instructions et de les exécuter. Dans un mode de réalisation, ces instructions forment un programme d'ordinateur causant l'exécution, par le processeur 1201, des procédés décrits ci-après en relation avec les Figs. 3, 4 et 5.

Tout ou partie des procédés décrits en relation avec les Figs. 3, 4 et 5 peuvent-être implémentés sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

La **Fig. 3** illustre schématiquement un procédé de migration d'un premier canal de communication vers un second canal de communication lors d'une détection d'un signal radar sur le premier canal.

Comme nous l'avons vu plus haut, chaque dispositif Wi-Fi du réseau 1 met en oeuvre des moyens connus de détection d'un signal radar. La détection d'un signal radar est appelée par la suite *détection DFS.* Chaque dispositif Wi-Fi du réseau 1 est capable d'exécuter le procédé décrit en relation avec la Fig. 3. Nous prenons ici l'exemple du dispositif Wi-Fi 12A, les dispositifs Wi-Fi 12B, 12C et 12D exécutant le procédé de la Fig. 3 de la même manière.

Dans une étape 301, le module de traitement 120 du dispositif 12A effectue une détection DFS sur un canal utilisé pour mettre en oeuvre le réseau d'infrastructure reliant le dispositif Wi-Fi 12A au dispositif Wi-Fi 12B et au dispositif Wi-Fi 12C. Ce canal est appelé par la suite *canal initial* et appartient à une première sous-bande de fréquence, dite *sous-bande initiale.* La sous-bande initiale est la sous-bande UNII-2, UNII2e ou UNII-3, puisqu'aucune détection DFS n'est possible sur la sous-bande UNII-1. La bande UNII-1 n'est en effet pas utilisé par les radars.

Dans une étape 302, le module de traitement 120 fait migrer le module point d'accès backhaul 1211 (et donc le module radio 1213 du module backhaul 121) du canal initial vers un canal d'une sous-bande de fréquence prédéfinie différente de la sous-bande initiale. Ce changement de canal a pour effet de faire migrer le réseau infrastructure utilisé par le module point d'accès backhaul 1211 vers un nouveau canal. La sous-bande de fréquence prédéfinie est appelée par la suite, *sous-bande de secours.* A la différence des mécanismes proposés dans la norme IEEE802.11h, la sous-bande de secours est connue au préalable et n'a pas à être déterminée. La sous-bande de secours a par exemple été fixée par le constructeur du dispositif Wi-Fi 12A ou à l'installation du dispositif Wi-Fi 12A.

Chaque dispositif Wi-Fi du réseau 1 a connaissance de la sous-bande de secours qu'utiliseraient tous les autres dispositifs Wi-Fi du réseau 1 en cas de détection DFS. Dans un mode de réalisation, tous les dispositifs Wi-Fi du réseau 1 échangent au moins une fois cette information ou échange cette information à chaque fois que cette information est mise à jour. Cette information peut par exemple être diffusée par un opérateur lors d'une configuration des dispositifs Wi-Fi du réseau 1.

Dans une étape 303, le module de traitement 120 se met en attente pendant une période NOP prédéfinie par exemple de « 30 » minutes.

A la fin de la période NOP, dans une étape 304, le module de traitement 120 fait migrer le module point accès backhaul 1211 (et donc le module radio 1213 du module backhaul 121) du canal de la sous-bande de secours vers le canal initial. Dans un mode de réalisation, si le canal initial a subi une détection DFS pendant une période NO_DFS précédant la fin de la période NOP, le module de traitement 120 ne fait pas migrer le module point accès backhaul 1211 mais laisse le module point d'accès backhaul 1211 sur le canal de la sous-bande de secours.

Dans l'exemple du réseau 1, le dispositif Wi-Fi 12A pourrait n'activer dans son module backhaul 121 que son module point d'accès backhaul 1211, son module station backhaul 1212 pouvant rester inactif. Certains dispositifs Wi-Fi du réseau 1, tels que les dispositifs Wi-Fi 12B et 12D n'ont besoin d'activer dans leur module backhaul 121 que leur module station backhaul 1212. D'autres dispositifs Wi-Fi du réseau 1, tels que le dispositif Wi-Fi 12C, doivent activer dans leur module backhaul 121, leur module station backhaul 1212 et leur module point d'accès backhaul 1211. Lors d'une détection DFS, le module de traitement 120 d'un dispositif Wi-Fi doit donc faire migrer vers un canal de la sous-bande de secours, soit le module point d'accès backhaul 1211 (et donc le module radio 1213), soit le module station backhaul 1212 (et donc le module radio 1213), soit les deux. Par exemple, lors d'une détection DFS par le dispositif Wi-Fi 12C, le dispositif Wi-Fi 12C doit faire migrer le module point d'accès 1211 et le module station 1212 vers un canal de la sous-bande de secours. Lors d'une détection DFS par le dispositif Wi-Fi 12B (respectivement 12D), le dispositif Wi-Fi 12B (respectivement 12D) doit faire migrer le module station 1212 vers un canal de la sous-bande de secours.

Dans un mode de réalisation, la sous-bande de secours est la sous-bande UNII-1 sur laquelle aucune détection DFS n'est possible. Dans ce cas, lors d'une détection DFS sur le canal initial, le module de traitement 120A choisit aléatoirement un canal de la sous-bande UNII-1.

Dans un mode de réalisation, la sous-bande de secours est une sous-bande prédéfinie différente de la sous-bande initiale parmi les sous-bandes UNII-2, UNII-2e ou UNII-3. Dans ce cas, lors d'une détection DFS sur le canal initial, le module de traitement 120A choisit aléatoirement un canal de la sous-bande de secours ou choisit aléatoirement un canal de la sous-bande de secours n'ayant pas subi de détection DFS pendant la période prédéfinie NO_DFS précédant la détection DFS sur le canal initial. La période prédéfinie NO_DFS est par exemple égale à « 20 » minutes.

Dans un mode de réalisation, lorsque la sous-bande de secours est une sous-bande prédéfinie différente de la sous-bande initiale parmi les sous-bandes UNII-2, UNII-2e ou UNII-3, la sous-bande de secours est déterminée par une procédure exécutée périodiquement par le dispositif Wi-Fi 12A. Cette procédure consiste à identifier la sous-bande parmi les sous-bandes UNII-2, UNII-2e ou UNII-3 dans laquelle les canaux subissent le moins de détections DFS.

On note que le canal choisi dans la sous-bande de secours est appelé par la suite *canal de secours.*

Dans un mode de réalisation, ce n'est pas une sous-bande de secours qui est prédéfinie mais directement le canal de secours, le canal de secours appartenant aux sous-bandes UNII-1, UNII-2, UNII-2e et UNII-3.

Dans un mode de réalisation, lorsque la sous-bande de secours est une des sous-bandes UNII-2, UNII-2e et UNII-3, si chaque canal de la sous-bande de secours a subi une détection DFS pendant la période prédéfinie NO_DFS précédent la détection DFS sur le canal initial, le module de traitement 120 choisit aléatoirement un canal de la sous bande UNII-1.

Dans un mode de réalisation, lors d'une détection DFS, lors de la migration d'un canal initial vers un canal de secours, le dispositif Wi-Fi change de module radio. Le nouveau module radio est alors appelé *module radio de secours.* Par exemple, pendant la période NOP, le module de traitement 120 décide d'utiliser le module radio 1222 du module fronthaul 122 ou l'un des modules radio 1222 du module fronthaul 122. En migrant vers un autre module radio qui est en cours d'utilisation, on fait migrer plus rapidement le réseau infrastructure utilisé par le module point d'accès backhaul 1211 vers un canal sans détection DFS.

Comme présenté ci-dessus en relation avec la Fig. 3, une détection DFS par un dispositif Wi-Fi entraîne la migration vers un canal d'une sous-bande de secours ou vers un canal de secours du module point d'accès 1211 et/ou du module station 1212 dudit dispositif Wi-Fi. Pour que le dispositif Wi-Fi ayant fait la détection DFS puisse continuer à communiquer avec son dispositif Wi-Fi parent s'il existe et son ou ses dispositifs Wi-Fi enfants s'ils existent, les dispositifs Wi-Fi parents et/ou enfants doivent effectuer la même migration. Comme nous l'avons vu plus haut, la norme IEEE802.11h prévoit qu'en cas de détection DFS, un dispositif Wi-Fi parent prévient ses dispositifs Wi-Fi enfants de la migration en leur envoyant une trame comprenant un élément CSA indiquant vers quel canal migrer. La trame n'étant pas acquittée, il n'est pas certain qu'elle atteigne son ou ses destinataires. Par ailleurs, la norme IEEE802.11h ne prévoit rien pour qu'un dispositif Wi-Fi enfant puisse informer son dispositif Wi-Fi parent qu'il a effectué une migration vers un canal d'une sous-bande de secours ou vers un canal de secours suite à une détection DFS.

La **Fig. 4** illustre schématiquement un procédé, exécuté par un dispositif Wi-Fi jouant un rôle de point d'accès, de gestion d'un canal de communication utilisé pour mettre en oeuvre un réseau d'infrastructure, en cas de déconnexion d'un dispositif Wi-Fi jouant un rôle de station.

Le procédé décrit en relation avec la Fig. 4 est par exemple exécuté par le dispositif Wi-Fi 12A. On suppose ici que l'un des dispositifs Wi-Fi enfants du dispositif Wi-Fi 12A a migré sur un canal de secours suite à une détection DFS. Le dispositif Wi-Fi enfant concerné par la migration est par exemple le dispositif 12C.

Dans une étape 401, le module de traitement 120 du dispositif Wi-Fi 12A détecte une déconnexion du dispositif Wi-Fi 12C du canal utilisé pour mettre en oeuvre le réseau d'infrastructure entre les dispositifs Wi-Fi 12A et 12C. Pour ce faire, le module de traitement 120 détecte qu'aucune trame d'entretien de connexion Wi-Fi n'a été reçue du dispositif Wi-Fi 12C pendant une période prédéfinie NO_FRAME. La période NO_FRAME est par exemple d'une minute. A ce stade, le dispositif Wi-Fi 12A ne connaît pas le motif de la déconnexion. Il sait toutefois qu'un motif possible est une détection DFS et que dans ce cas, suivant les modes de réalisation, le dispositif Wi-Fi 12C fait migrer son module station backhaul 1212 vers un canal d'une sous-bande de secours, vers un canal de secours ou vers un canal de secours d'une sous-bande de secours en utilisant un module radio de secours.

Lorsque le dispositif Wi-Fi 12A sait qu'en cas de détection DFS, le dispositif Wi-Fi 12C fait migrer son module station backhaul 1212 vers un canal d'une sous-bande de secours, dans une étape 402, le module de traitement 120 utilise le module radio 1213 pour scanner les canaux de la sous-bande de secours et se met en écoute sur chacun des canaux.

Lorsque le dispositif Wi-Fi 12A sait qu'en cas de détection DFS, le dispositif Wi-Fi 12C fait migrer son module station backhaul 1212 vers un canal de secours, dans une étape 402, le module de traitement 120 configure le module radio 1213 pour qu'il se mette en écoute sur le canal de secours du dispositif Wi-Fi 12C.

Dans une étape 403, le module de traitement 120 détermine si le dispositif Wi-Fi 12A a reçu au moins un identifiant du dispositif Wi-Fi 12C sur le canal de secours ou sur un des canaux de la sous-bande de secours. L'identifiant est par exemple un SSID (identifiant d'ensemble de service, « Service Set Identifier » en terminologie anglo-saxonne). En cas de détection d'un identifiant du dispositif Wi-Fi 12C sur le canal de secours ou sur un canal de la sous-bande de secours, le module de traitement 120 exécute une étape 405. Sinon le module de traitement 120 exécute une étape 404.

Lors de l'étape 404, le module de traitement 120 détermine si le dispositif Wi-Fi 12C s'est reconnecté sur le canal initial. Si c'est le cas, le module de traitement 120 considère que la déconnexion du dispositif Wi-Fi 12C n'était que temporaire et que le réseau d'infrastructure peut rester sur le canal initial. Le module de traitement 120 met alors fin au procédé de la Fig. 4 lors d'une étape 409. Si le dispositif Wi-Fi 12C ne s'est pas reconnecté sur le canal initial, le module de traitement 120 revient à l'étape 402.

Lors de l'étape 405, le module de traitement 120 fait migrer le module point d'accès backhaul 1211 du dispositif Wi-Fi 12A sur le canal de secours utilisé par le dispositif Wi-Fi 12C.

Dans une étape 406, le module de traitement 120 vérifie si le dispositif Wi-Fi 12C s'est reconnecté sur le canal initial. Si ce n'est pas le cas, le module de traitement 120 se met en attente pendant une durée prédéfinie, par exemple égale à « 20 » minutes, et revient à l'étape 406. Si le module de traitement 120 détecte que le dispositif Wi-Fi 12C s'est reconnecté sur le canal initial, dans une étape 408, il fait migrer le module point d'accès 1211 du dispositif Wi-Fi 12A sur le canal initial et met fin au procédé décrit en relation avec la Fig. 4 lors de l'étape 409. Par conséquent, tant qu'une durée depuis la dernière détection d'un signal radar sur le canal initial n'est pas supérieure ou égale à la durée prédéfinie de « 20 » minutes, le module point d'accès backhaul 1211 reste sur le canal de secours.

On note que dans le cas de l'exemple de la Fig. 4, la migration du module point d'accès 1211 du dispositif Wi-Fi 12A sur le canal de secours, entraîne la migration du module station 1212 du dispositif Wi-Fi 12C sur le même canal de secours.

La Fig. 4 décrit un procédé mis en oeuvre par un dispositif Wi-Fi parent d'un dispositif Wi-Fi enfant ayant effectué une détection DFS et migré vers un canal de secours. Le dispositif Wi-Fi 12A utilisé dans cet exemple est un dispositif Wi-Fi exclusivement parent. Si le dispositif Wi-Fi parent avait été le dispositif Wi-Fi 12C et le dispositif enfant ayant effectué la détection DFS le dispositif 12D, le dispositif Wi-Fi 12C étant aussi enfant du dispositif Wi-Fi 12A, le dispositif Wi-Fi 12C aurait eu une réaction strictement identique à celle du dispositif 12A face à la détection DFS du dispositif Wi-Fi 12C. Le dispositif Wi-Fi 12C aurait fait basculer uniquement son module point d'accès backhaul 1211 vers le canal de secours, mais n'aurait pas modifié son canal utilisé par le module station backhaul 1212.

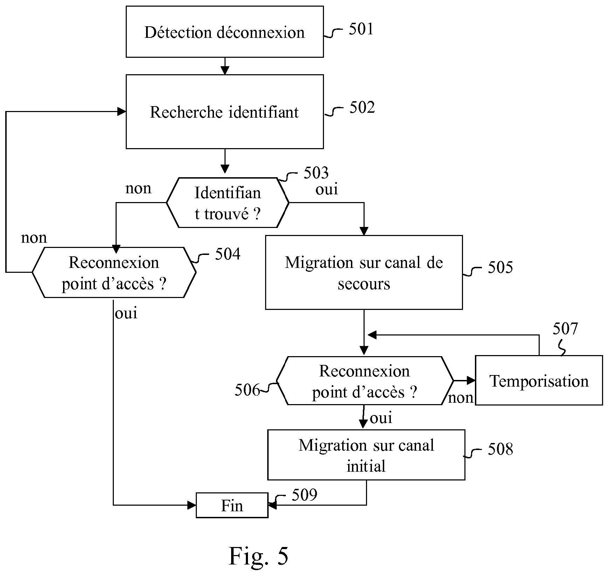

La **Fig. 5** illustre schématiquement un procédé, exécuté par un dispositif Wi-Fi jouant un rôle de station, de gestion d'un canal de communication utilisé pour mettre en oeuvre un réseau d'infrastructure, en cas de déconnexion d'un dispositif Wi-Fi jouant un rôle de point d'accès.

Le procédé décrit en relation avec la Fig. 4 est par exemple exécuté par le dispositif Wi-Fi 12D. On suppose ici que le dispositif Wi-Fi parent du dispositif Wi-Fi 12D *(i.e.* le dispositif Wi-Fi 12C) a migré sur un canal de secours suite à une détection DFS, mais qu'aucune trame contenant l'élément CSA n'a été reçue par le dispositif Wi-Fi 12D.

Dans une étape 501, le module de traitement 120 du dispositif Wi-Fi 12D détecte une déconnexion du dispositif Wi-Fi 12C du canal utilisé pour mettre en oeuvre le réseau d'infrastructure entre les dispositifs Wi-Fi 12C et 12D. Pour ce faire, le module de traitement 120 du dispositif Wi-Fi 12D détecte qu'aucune trame d'entretien de connexion Wi-Fi n'a été reçue du dispositif Wi-Fi 12C pendant la période prédéfinie NO_FRAME. A ce stade, le dispositif Wi-Fi 12D ne connaît pas le motif de la déconnexion. Il sait toutefois qu'un motif possible est une détection DFS et que dans ce cas, suivant les modes de réalisation, le dispositif Wi-Fi 12C fait migrer son module point d'accès backhaul 1211 vers un canal d'une sous-bande de secours, vers un canal de secours ou vers un canal de secours d'une sous-bande de secours en utilisant un module radio de secours.

Lorsque le dispositif Wi-Fi 12D sait qu'en cas de détection DFS, le dispositif Wi-Fi 12C fait migrer son module point d'accès backhaul 1211 vers un canal d'une sous-bande de secours, dans une étape 502, le module de traitement 120 utilise le module radio 1213 pour scanner les canaux de la sous-bande de secours et se met en écoute sur chacun des canaux.

Lorsque le dispositif Wi-Fi 12D sait qu'en cas de détection DFS, le dispositif Wi-Fi 12C fait migrer son module point d'accès backhaul 1211 vers un canal de secours, dans une étape 502, le module de traitement 120 configure le module radio 1213 pour qu'il se mette en écoute sur le canal de secours du dispositif Wi-Fi 12C.

Dans une étape 503, le module de traitement 120 détermine si le dispositif Wi-Fi 12D a reçu au moins une trame contenant un identifiant du dispositif Wi-Fi 12C sur le canal de secours ou sur un des canaux de la sous-bande de secours. L'identifiant est par exemple un SSID (identifiant d'ensemble de service, « Service Set Identifier » en terminologie anglo-saxonne). En cas de réception d'une trame contenant un identifiant du dispositif Wi-Fi 12C sur le canal de secours ou sur un canal de la sous-bande de secours, le module de traitement 120 exécute une étape 505. Sinon le module de traitement 120 exécute une étape 504.

Lors de l'étape 504, le module de traitement 120 détermine si le dispositif Wi-Fi 12C s'est reconnecté sur le canal initial. Si c'est le cas, le module de traitement 120 considère que la déconnexion du dispositif Wi-Fi 12C n'était que temporaire et que le réseau d'infrastructure peut rester sur le canal initial. Le module de traitement 120 met alors fin au procédé de la Fig. 5 lors d'une étape 509. Si le dispositif Wi-Fi 12C ne s'est pas reconnecté sur le canal initial, le module de traitement 120 revient à l'étape 502.

Lors de l'étape 505, le module de traitement 120 fait migrer le module station backhaul 1212 du dispositif Wi-Fi 12D sur le canal de secours utilisé par le dispositif Wi-Fi 12C.

Dans une étape 506, le module de traitement 120 vérifie si le dispositif Wi-Fi 12C s'est reconnecté sur le canal initial. Si ce n'est pas le cas, le module de traitement 120 se met en attente pendant une durée prédéfinie, par exemple égale à « 20 » minutes, et revient à l'étape 506. Si le module de traitement 120 détecte que le dispositif Wi-Fi 12C s'est reconnecté sur le canal initial, dans une étape 508, il fait migrer le module station backhaul 1212 du dispositif Wi-Fi 12D sur le canal initial et met fin au procédé décrit en relation avec la Fig. 5 lors de l'étape 509. Par conséquent, tant qu'une durée depuis la dernière détection d'un signal radar sur le canal initial n'est pas supérieure ou égale à la durée prédéfinie de « 20 » minutes, le module station backhaul 1212 reste sur le canal de secours.

La Fig. 5 décrit un procédé mis en oeuvre par un dispositif Wi-Fi enfant d'un dispositif Wi-Fi parent ayant effectué une détection DFS et migré vers un canal de secours. On peut remarquer que dans l'exemple de la Fig. 5, le dispositif Wi-Fi 12C est à la fois parent pour le dispositif 12D et enfant pour le dispositif 12A. La détection DFS par le dispositif Wi-Fi 12C, du fait de son double statut parent/enfant, provoque la migration des modules point d'accès backhaul 1211 et station backhaul 1212 du dispositif Wi-Fi 12C vers un canal de secours. Si, suite à cette migration, le dispositif Wi-Fi 12D ne reçoit pas de trame contenant l'élément CSA, le dispositif Wi-Fi 12D exécute le procédé décrit en relation avec la Fig. 5. De son côté, suite à cette migration, le dispositif Wi-Fi 12A exécute le procédé décrit en relation avec la Fig. 4.

## Revendications

1. Procédé de gestion d'un canal de communication utilisé par une pluralité de dispositifs Wi-Fi d'un réseau Wi-Fi de type infrastructure pour mettre en oeuvre un réseau d'infrastructure dans ledit réseau Wi-Fi, **caractérisé en ce que** le procédé est exécuté par un premier dispositif Wi-Fi de la pluralité et comprend :
a) détecter (401, 501) qu'un second dispositif Wi-Fi de la pluralité connecté directement au premier dispositif Wi-Fi s'est déconnecté d'un canal initial d'une sous-bande initiale d'une bande de fréquence par détection qu'aucune trame d'entretien de connexion Wi-Fi n'a été reçue, sur le canal initial, en provenance dudit second dispositif Wi-Fi pendant une période prédéfinie, ledit canal initial étant utilisé par la pluralité de dispositifs Wi-Fi pour mettre en oeuvre le réseau d'infrastructure ;
b) suite à cette détection, se mettre en écoute (402, 502) sur chaque canal de communication d'une sous-bande prédéfinie, dite sous-bande de secours d'une bande de fréquence, sur lequel le second dispositif Wi-Fi peut migrer pour mettre en oeuvre le réseau d'infrastructure en cas de détection par le second dispositif Wi-Fi d'un signal radar sur le canal initial, les sous-bandes initiale et de secours étant différentes ;
- en cas de réception par le premier dispositif Wi-Fi sur un canal (403, 503), dit canal de secours, de ladite sous-bande de secours d'une trame contenant un identifiant du second dispositif :
- faire migrer (405, 505) le premier dispositif Wi-Fi vers ledit canal de secours,
- vérifier (406) si le second dispositif s'est reconnecté sur le canal initial ;
- si le second dispositif s'est reconnecté sur le canal initial, faire migrer (408) le premier dispositif Wi-Fi vers ledit canal initial ;
- sinon, attendre (407) pendant une durée prédéfinie et répéter ladite vérification (406) ;
; et
- sinon, rester (404, 409) sur ledit canal initial si ledit premier dispositif détermine que le second dispositif s'est reconnecté sur le canal initial et, sinon, répéter (402) l'étape b).

2. Procédé selon la revendication 1, **caractérisé en ce que** la sous-bande de secours est une sous-bande d'une bande de fréquence utilisable par un réseau Wi-Fi sur laquelle aucune détection d'un signal radar n'est possible.

3. Procédé selon la revendication 1 ou 2, **caractérisé en ce que** le canal de secours est prédéfini dans la sous-bande de secours.

4. Procédé selon l'une quelconque des revendications précédentes, **caractérisé en ce que** chaque dispositif Wi-Fi de la pluralité comprend une pluralité de modules radio, au moins un premier module radio étant utilisé pour mettre en oeuvre le réseau d'infrastructure en utilisant le canal initial et au moins un second module radio étant utilisé pour mettre en oeuvre un réseau d'accès permettant à des terminaux Wi-Fi de se connecter à un des dispositifs Wi-Fi mettant en oeuvre le réseau d'infrastructure, et **en ce que**, lors de chaque migration d'un dispositif Wi-Fi de la pluralité vers un canal de secours, le dispositif Wi-Fi utilise un second module radio pour communiquer sur le canal de secours.

5. Procédé selon l'une quelconque des revendications précédentes, **caractérisé en ce que** chaque dispositif Wi-Fi de la pluralité comprend un module, dit module point d'accès, adapté pour faire fonctionner ledit dispositif Wi-Fi en mode point d'accès dans le réseau d'infrastructure et un module, dit module station, adapté pour faire fonctionner le dispositif Wi-Fi en mode station dans le réseau d'infrastructure, le premier dispositif Wi-Fi fonctionnant en mode point d'accès vis-à-vis du deuxième dispositif Wi-Fi qui fonctionne en mode station vis-à-vis du premier dispositif Wi-Fi, ou le premier dispositif Wi-Fi fonctionnant en mode station vis-à-vis du deuxième dispositif Wi-Fi qui fonctionne en mode point d'accès vis-à-vis du premier dispositif Wi-Fi.

6. Dispositif Wi-Fi compris dans une pluralité de dispositifs Wi-Fi d'un réseau Wi-Fi de type infrastructure, la pluralité de dispositifs Wi-Fi implémentant un réseau d'infrastructure dans le réseau Wi-Fi, **caractérisé en ce que** le dispositif Wi-Fi, dit premier dispositif Wi-Fi, comprend au moins un processeur configuré pour :
a) détecter (401, 501) qu'un second dispositif Wi-Fi de la pluralité connecté directement au premier dispositif Wi-Fi s'est déconnecté d'un canal initial d'une sous-bande initiale d'une bande de fréquence par détection qu'aucune trame d'entretien de connexion Wi-Fi n'a été reçue, sur le canal initial, en provenance dudit second dispositif Wi-Fi pendant une période prédéfinie, ledit canal initial étant utilisé par la pluralité de dispositifs Wi-Fi pour mettre en oeuvre le réseau d'infrastructure ;
b) suite à cette détection, se mettre en écoute (402, 502) sur chaque canal de communication d'une sous-bande prédéfinie, dite sous-bande de secours d'une bande de fréquence, sur lequel le second dispositif Wi-Fi peut migrer pour mettre en oeuvre le réseau d'infrastructure en cas de détection par le second dispositif Wi-Fi d'un signal radar sur le canal initial, les sous-bandes initiale et de secours étant différentes ;
- en cas de réception par le premier dispositif Wi-Fi sur un canal (403, 503), dit canal de secours, de ladite sous-bande de secours d'une trame contenant un identifiant du second dispositif :
- faire migrer (405, 505) le premier dispositif Wi-Fi vers ledit canal de secours,
- vérifier (406) si le second dispositif s'est reconnecté sur le canal initial ;
- si le second dispositif s'est reconnecté sur le canal initial, faire migrer (408) le premier dispositif Wi-Fi vers ledit canal initial ;
- sinon, attendre (407) pendant une durée prédéfinie et répéter ladite vérification (406) ;
; et
- sinon, rester (409) sur ledit canal initial si ledit premier dispositif détermine que le second dispositif s'est reconnecté sur le canal initial et, sinon, répéter (402) l'étape b).

7. Système comprenant une pluralité de dispositifs selon la revendication 6, **caractérisé en ce que** chaque dispositif Wi-Fi de la pluralité comprend un module, dit module point d'accès, adapté pour faire fonctionner ledit dispositif Wi-Fi en mode point d'accès dans le réseau d'infrastructure et un module, dit module station, adapté pour faire fonctionner le dispositif Wi-Fi en mode station dans le réseau d'infrastructure, les dispositifs Wi-Fi de la pluralité étant organisés selon une hiérarchie parent/enfant, un premier dispositif Wi-Fi de la pluralité étant parent d'un deuxième dispositif Wi-Fi de la pluralité lorsqu'il fonctionne en mode point d'accès vis-à-vis du deuxième dispositif Wi-Fi qui lui fonctionne en mode station vis-à-vis du premier dispositif Wi-Fi, la pluralité de dispositifs Wi-Fi comprenant au moins un dispositif Wi-Fi exclusivement parent, et au moins un dispositif Wi-Fi exclusivement enfant.

8. Système selon la revendication 7, **caractérisé en ce que** la pluralité de dispositifs Wi-Fi comprend au moins un dispositif Wi-Fi conjointement parent et enfant.

9. Programme d'ordinateur, **caractérisé en ce qu'**il comprend des instructions pour mettre en oeuvre, par un dispositif (120) Wi-Fi d'un réseau Wi-Fi de type infrastructure, le procédé selon l'une quelconque des revendications 1 à 5, lorsque ledit programme est exécuté par un processeur dudit dispositif (120).

10. Moyens de stockage, **caractérisés en ce qu'**ils stockent un programme d'ordinateur comprenant des instructions pour mettre en oeuvre, par un dispositif (120) Wi-Fi d'un réseau Wi-Fi de type infrastructure, le procédé selon l'une quelconque des revendications 1 à 5, lorsque ledit programme est exécuté par un processeur dudit dispositif (120).

## Patentansprüche

1. Verfahren zur Verwaltung eines Kommunikationskanals, der von einer Vielzahl von WiFi-Geräten eines WiFi-Netzwerks des Typs Infrastruktur verwendet wird, um ein Infrastrukturnetz im WiFi-Netzwerk zu implementieren, **dadurch gekennzeichnet, dass** das Verfahren von einem ersten WiFi-Gerät der Vielzahl ausgeführt wird und enthält:
a) Erkennen (401, 501), dass ein zweites WiFi-Gerät der Vielzahl, das direkt mit dem ersten WiFi-Gerät verbunden ist, sich von einem Anfangskanal eines Anfangsteilbands eines Frequenzbands getrennt hat, durch Erkennung, dass während eines vordefinierten Zeitraums kein vom zweiten WiFi-Gerät kommender WiFi-Verbindungsinstandhaltungsframe auf dem Anfangskanal empfangen wurde, wobei der Anfangskanal von der Vielzahl von WiFi-Geräten verwendet wird, um das Infrastrukturnetz zu implementieren;
b) nach dieser Erkennung Abhören (402, 502) auf jedem Kommunikationskanal eines vordefinierten Teilbands, Hilfsteilband eines Frequenzbands genannt, auf dem das zweite WiFi-Gerät migrieren kann, um das Infrastrukturnetz im Fall der Erkennung eines Radarsignals auf dem Anfangskanal durch das zweite WiFi-Gerät zu implementieren, wobei die Anfangs- und Hilfsteilbänder unterschiedlich sind;
- im Fall des Empfangs durch das erste WiFi-Gerät auf einem Kanal (403, 503), Hilfskanal genannt, des Hilfsteilbands eines eine Kennung des zweiten Geräts enthaltenden Frames:
- das erste WiFi-Gerät zum Hilfskanal migrieren zu lassen (405, 505),
- zu überprüfen (406), ob das zweite Gerät sich wieder mit dem Anfangskanal verbunden hat;
- wenn das zweite Gerät sich wieder mit dem Anfangskanal verbunden hat, das erste WiFi-Gerät zum Anfangskanal migrieren zu lassen (408);
- sonst während eines vordefinierten Zeitraums zu warten (407) und die Überprüfung zu wiederholen (406); und
- sonst auf dem Anfangskanal zu bleiben (404, 409), wenn das erste Gerät feststellt, dass das zweite Gerät sich wieder mit dem Anfangskanal verbunden hat, und sonst den Schritt b) zu wiederholen (402) .

2. Verfahren nach Anspruch 1, **dadurch gekennzeichnet, dass** das Hilfsteilband ein Teilband eines von einem WiFi-Netzwerk verwendbaren Frequenzbands ist, auf dem keine Erkennung eines Radarsignals möglich ist.

3. Verfahren nach Anspruch 1 oder 2, **dadurch gekennzeichnet, dass** der Hilfskanal im Hilfsteilband vordefiniert ist.

4. Verfahren nach einem der vorhergehenden Ansprüche, **dadurch gekennzeichnet, dass** jedes WiFi-Gerät der Vielzahl eine Vielzahl von Funkmodulen enthält, wobei mindestens ein erstes Funkmodul verwendet wird, um das Infrastrukturnetz zu implementieren, indem der Anfangskanal verwendet wird, und mindestens ein zweites Funkmodul verwendet wird, um ein Zugangsnetz zu implementieren, das es WiFi-Endgeräten ermöglicht, sich mit einem der WiFi-Geräte zu verbinden, die das Infrastrukturnetz implementieren, und dass bei jeder Migration eines WiFi-Geräts der Vielzahl zu einem Hilfskanal das WiFi-Gerät ein zweites Funkmodul verwendet, um auf dem Hilfskanal zu kommunizieren.

5. Verfahren nach einem der vorhergehenden Ansprüche, **dadurch gekennzeichnet, dass** jedes WiFi-Gerät der Vielzahl ein Modul, Zugangspunktmodul genannt, das geeignet ist, das WiFi-Gerät im Zugangspunktmodus im Infrastrukturnetz arbeiten zu lassen, und ein Modul, Stationsmodul genannt, enthält, das geeignet ist, das WiFi-Gerät im Stationsmodus im Infrastrukturnetz arbeiten zu lassen, wobei das erste WiFi-Gerät im Zugangspunktmodus gegenüber dem zweiten WiFi-Gerät arbeitet, das im Stationsmodus gegenüber dem ersten WiFi-Gerät arbeitet, oder das erste WiFi-Gerät im Stationsmodus gegenüber dem zweiten WiFi-Gerät arbeitet, das im Zugangspunktmodus gegenüber dem ersten WiFi-Gerät arbeitet.

6. WiFi-Gerät, das in einer Vielzahl von WiFi-Geräten eines WiFi-Netzwerks des Typs Infrastruktur enthalten ist, wobei die Vielzahl von WiFi-Geräten ein Infrastrukturnetz im WiFi-Netzwerk implementiert, **dadurch gekennzeichnet, dass** das WiFi-Gerät, erstes WiFi-Gerät genannt, mindestens einen Prozessor enthält, der konfiguriert ist:
a) zu erkennen (401, 501), dass ein zweites WiFi-Gerät der Vielzahl, das direkt mit dem ersten WiFi-Gerät verbunden ist, sich von einem Anfangskanal eines Anfangsteilbands eines Frequenzbands getrennt hat, durch Erkennung, dass während eines vordefinierten Zeitraums kein vom zweiten WiFi-Gerät kommender WiFi-Verbindungsinstandhaltungsframe auf dem Anfangskanal empfangen wurde, wobei der Anfangskanal von der Vielzahl von WiFi-Geräten verwendet wird, um das Infrastrukturnetz zu implementieren;
b) nach dieser Erkennung auf jedem Kommunikationskanal eines vordefinierten Teilbands, Hilfsteilband eines Frequenzbands genannt, auf dem das zweite WiFi-Gerät migrieren kann, abzuhören (402, 502), um das Infrastrukturnetz im Fall der Erkennung eines Radarsignals auf dem Anfangskanal durch das zweite WiFi-Gerät zu implementieren, wobei die Anfangs- und Hilfsteilbänder unterschiedlich sind;
- im Fall des Empfangs durch das erste WiFi-Gerät auf einem Kanal (403, 503), Hilfskanal genannt, des Hilfsteilbands eines Frames, der eine Kennung des zweiten Geräts enthält:
- das erste WiFi-Gerät zum Hilfskanal migrieren zu lassen (405, 505),
- zu überprüfen (406), ob das zweite Gerät sich wieder mit dem Anfangskanal verbunden hat;
- wenn das zweite Gerät sich wieder mit dem Anfangskanal verbunden hat, das erste WiFi-Gerät zum Anfangskanal migrieren zu lassen (408);
- sonst während einer vordefinierten Dauer zu warten (407) und die Überprüfung zu wiederholen (406); und
- sonst auf dem Anfangskanal zu bleiben (409), wenn das erste Gerät feststellt, dass das zweite Gerät sich wieder mit dem Anfangskanal verbunden hat, und sonst den Schritt b) zu wiederholen (402).

7. System, das eine Vielzahl von Geräten nach Anspruch 6 enthält, **dadurch gekennzeichnet, dass** jedes WiFi-Gerät der Vielzahl ein Modul, Zugangspunktmodul genannt, das geeignet ist, das WiFi-Gerät im Zugangspunktmodus im Infrastrukturnetz arbeiten zu lassen, und ein Modul, Stationsmodul genannt, enthält, das geeignet ist, das WiFi-Gerät im Stationsmodus im Infrastrukturnetz arbeiten zu lassen, wobei die WiFi-Geräte der Vielzahl gemäß einer Eltern/Kind-Hierarchie organisiert sind, wobei ein erstes WiFi-Gerät der Vielzahl Eltern eines zweiten WiFi-Geräts der Vielzahl ist, wenn es im Zugangspunktmodus gegenüber dem zweiten WiFi-Gerät arbeitet, das seinerseits im Stationsmodus gegenüber dem ersten WiFi-Gerät arbeitet, wobei die Vielzahl von WiFi-Geräten mindestens ein WiFi-Gerät ausschließlich Eltern und mindestens ein WiFi-Gerät ausschließlich Kind enthält.

8. System nach Anspruch 7, **dadurch gekennzeichnet, dass** die Vielzahl von WiFi-Geräten mindestens ein WiFi-Gerät enthält, das zugleich Eltern und Kind ist.

9. Computerprogramm, **dadurch gekennzeichnet, dass** es Anweisungen enthält, um durch ein WiFi-Gerät (120) eines WiFi-Netzwerks des Typs Infrastruktur das Verfahren nach einem der Ansprüche 1 bis 5 zu implementieren, wenn das Programm von einem Prozessor des Geräts (120) ausgeführt wird.

10. Speichereinrichtungen, **dadurch gekennzeichnet, dass** sie ein Computerprogramm speichern, das Anweisungen enthält, um durch ein WiFi-Gerät (120) eines WiFi-Netzwerks des Typs Infrastruktur das Verfahren nach einem der Ansprüche 1 bis 5 zu implementieren, wenn das Programm von einem Prozessor des Geräts (120) ausgeführt wird.

## Claims

1. Method for managing a communication channel used by a plurality of Wi-Fi devices of a Wi-Fi network of the backhaul type in order to implement a backhaul network in said Wi-Fi network, **characterised in that** the method is executed by a first Wi-Fi device in the plurality and comprises:
(a) detecting (401, 501) that a second Wi-Fi device in the plurality connected directly to the first Wi-Fi device has disconnected from an initial channel of an initial sub-band of a frequency band
by detecting that no Wi-Fi connection-maintaining frame has been received, on the initial channel, coming from said second Wi-Fi device during a predefined period, said initial channel being used by the plurality of Wi-Fi devices to implement the backhaul network;
(b) following this detection, listening (402, 502) on each communication channel of a predefined sub-band, referred to as a backup sub-band of a frequency band, onto which the second Wi-Fi device is able to migrate in order to implement the backhaul network in the event of detection, by the second Wi-Fi device, of a radar signal on the initial channel, the initial and backup sub-bands being different;
- in the event of reception by the first Wi-Fi device on a channel (403, 503), referred to as the backup channel, of said backup sub-band, of a frame containing an identifier of the second device:
- causing the first Wi-Fi device to migrate (405, 505) to said backup channel,
- checking (406) whether the second device has reconnected to the initial channel;
- if the second device has reconnected to the initial channel, causing the first Wi-Fi device to migrate (408) to said backup channel;
- if not, waiting (407) for a predefined period and repeating said check (406);
and
- if not, remaining (404, 409) on said initial channel if said first device determines that the second device has reconnected to the initial channel and, if not, repeating (402) the step b).

2. Method according to claim 1, **characterised in that** the backup sub-band is a sub-band of a frequency sub-band that can be used by a Wi-Fi network whereon no detection of a radar signal is possible.

3. Method according to claim 1 or 2, **characterised in that** the backup channel is predefined in the backup sub-band.

4. Method according to any one of the preceding claims, **characterised in that** each Wi-Fi device in the plurality comprises a plurality of radio modules, at least one first radio module being used for implementing the backhaul network using the initial channel and at least one second radio module being used for implementing an access network enabling Wi-Fi terminals to connect to one of the Wi-Fi devices implementing the backhaul network, and **in that**, at each migration of a Wi-Fi device in the plurality to a backup channel, the Wi-Fi device uses a second radio module for communicating on the backup channel.

5. Method according to any one of the preceding claims, **characterised in that** each Wi-Fi device in the plurality comprises a module, referred to as an access-point module, adapted for causing said Wi-Fi device to function in access-point mode in the backhaul network, and a module, referred to as a station module, adapted for causing the Wi-Fi device to function in station mode in the backhaul network, the first Wi-Fi device functioning in access-point mode vis-à-vis the second Wi-Fi device, which functions in station mode vis-à-vis the first Wi-Fi device, or the first Wi-Fi device functioning in station mode vis-à-vis the second Wi-Fi device which functions in access-point mode vis-à-vis the first Wi-Fi device.

6. Wi-Fi device included in a plurality of Wi-Fi devices in a Wi-Fi network of the backhaul type, the plurality of Wi-Fi devices implementing a backhaul network in the Wi-Fi network, **characterised in that** the Wi-Fi device, referred to as the first Wi-Fi device, comprises at least one processor configured for:
(a) detecting (401, 501) that a second Wi-Fi device in the plurality connected directly to the first Wi-Fi device has disconnected from an initial channel of an initial sub-band of a frequency band
by detecting that no Wi-Fi connection-maintaining frame has been received, on the initial channel, coming from said second Wi-Fi device during a predefined period, said initial channel being used by the plurality of Wi-Fi devices to implement the backhaul network;
(b) following this detection, listening (402, 502) on each communication channel of a predefined sub-band, referred to as a backup sub-band of a frequency band, onto which the second Wi-Fi device is able to migrate in order to implement the backhaul network in the event of detection, by the second Wi-Fi device, of a radar signal on the initial channel, the initial and backup sub-bands being different;
- in the event of reception by the first Wi-Fi device on a channel (403, 503), referred to as the backup channel, of said backup sub-band, of a frame containing an identifier of the second device:
- causing the first Wi-Fi device to migrate (405, 505) to said backup channel,
- checking (406) whether the second device has reconnected to the initial channel;
- if the second device has reconnected to the initial channel, causing the first Wi-Fi device to migrate (408) to said backup channel;
- if not, waiting (407) for a predefined period and repeating said check (406);
and
- if not, remaining (409) on said initial channel if said first device determines that the second device has reconnected to the initial channel and, if not, repeating (402) the step b).

7. System comprising a plurality of devices according to claim 6, **characterised in that** each Wi-Fi device in the plurality comprises a module, referred to as an access-point module, adapted for causing said Wi-Fi device to function in access-point mode in the backhaul network, and a module, referred to as a station module, adapted for causing the Wi-Fi device to function in station mode in the backhaul network, the Wi-Fi devices in the plurality being organised in a parent/child hierarchy, a first Wi-Fi device in the plurality being the parent of a second Wi-Fi device in the plurality when it is functioning in access-point mode vis-à-vis the second Wi-Fi device, which for its part functions in station mode vis-à-vis the first Wi-Fi device, the plurality of Wi-Fi devices comprising at least one exclusively parent Wi-Fi device, and at least one exclusively child Wi-Fi device.

8. System according to claim 7, **characterised in that** the plurality of Wi-Fi devices comprise at least one conjointly parent and child Wi-Fi device.

9. Computer program, **characterised in that** it comprises instructions for implementing, by a Wi-Fi device (120) of a Wi-Fi network of the backhaul type, the method according to any one of claims 1 to 5, when said program is executed by a processor of said device (120).

10. Storage means, **characterised in that** they store a computer program comprising instructions for implementing, by a Wi-Fi device (120) of a Wi-Fi network of the backhaul type, the method according to any one of claims 1 to 5, when said program is executed by a processor of said device (120).
